# EUROPÄISCHE PATENTSCHRIFT

(11) **EP 2 251 578 B1**
(45) Veröffentlichungstag und Bekanntmachung des Hinweises auf die Patenterteilung: **04.10.2017**
(21) Anmeldenummer: 10004853.7
(22) Anmeldetag: 08.05.2010
(51) Int. Cl.: F16K 31/60, F16K 35/02

(54) **Drehgriff für eine Sanitärarmatur**
Rotary handle for a sanitary fitting
Poignée rotative pour une armature sanitaire

(30) Priorität: 13.05.2009 DE 102009021185
(43) Veröffentlichungstag der Anmeldung: 17.11.2010
(73) Patentinhaber: Grohe AG, 58675 Hemer (DE)
(72) Erfinder: Luig, Frank-Thomas, 58708 Menden (DE); Huck, Kai, 58300 Wetter (DE); Riedel, Björn, 44879 Bochum (DE)

(56) Entgegenhaltungen:
- EP-A1- 0 778 434
- EP-A1- 1 659 322
- EP-A2- 0 683 341
- EP-A2- 1 903 268

## Beschreibung

Die vorliegende Erfindung betrifft eine Anordnung für ein thermostatisch geregeltes Mischventil gemäß dem Oberbegriff des Patentanspruchs 1.

Bei thermostatisch geregelten Mischventilen für Sanitärarmaturen mit Temperaturweggebern/Ventilelementen in Form von Dehnstoffelementen ist das Verhältnis zwischen Drehwinkel des Drehgriffs, mit dem die Temperatur gewählt und eingestellt wird, und dem Weg des Ventilelements im Wesentlichen linear. Das bedeutet, dass der Weg des Ventilelements pro Schrittwinkel des Drehgriffs in einem Niedrigtemperaturbereich unter 25°, in einem Mitteltemperaturbereich von 25 bis 40° und einem Hochtemperaturbereich von über 40° im Wesentlichen gleichförmig ist.
Bei Sanitärarmaturen mit Thermostaten wird jedoch erwartet, dass gerade im mittleren Temperaturbereich eine Feineinstellung der Wassermenge möglich ist. Daher werden für die Temperaturweggeber Dehnstoffelemente mit besonderen Kennlinien gewählt. Dehnstoffelemente mit mäßig steilen Kennlinien gewährleisten eine feine Temperaturregulierung, benötigen jedoch einen besonders großen Drehbereich des Drehgriffs. Dies geht jedoch zu Lasten der einstellbaren/wählbaren Kalt- oder Warmwasservorlauftemperaturen, da der Drehwinkel des Drehgriffs durch die notwendigen Festanschläge beschränkt ist.

Aus dem Stand der Technik sind beispielsweise durch die EP 1 150 054 B1 Betätigungsmechanismen bekannt, bei denen versucht wird, Kennlinien mit unterschiedlichen Steigungen im Niedrig- und Hochtemperaturbereich gegenüber dem Mitteltemperaturbereich herzustellen. Über unterschiedlich vorgespannte Federn wird die Kennlinie des Ventilelements beeinflusst, so dass deren Steigung im Mitteltemperaturbereich flacher ist als in den anderen Temperaturbereichen. Somit soll im Mitteltemperaturbereich ein breiterer Drehbereich erreicht werden, ohne den gesamten Drehbereich eines Temperaturwählgriffs zu vergrößern.

Andere Stell- bzw. Drehgriffe sind beispielsweise aus der EP 0 683 341 A2, der EP 1 659 322 A1, der EP 1 903 268 A2 oder der EP 0 778 434 A1 bekannt. All diese bekannten Ausführungsformen können jedoch keine Drehbewegungen mit Drehwinkeln von mehr als 360° ausführen.

Vor diesem Hintergrund besteht die Aufgabe der Erfindung darin, eine Anordnung für ein thermostatisch geregeltes Ventil zu verbessern.

Diese Aufgabe wird durch eine Anordnung mit den Merkmalen des Patentanspruchs 1 gelöst. Vorteilhafte Ausgestaltungen sind Gegenstand der Unteransprüche.

Mit der Erfindung wird eine Anordnung für ein thermostatisch geregeltes Ventil bereitgestellt, mit einem Drehgriff, der an einem aus einem Ventilgehäuse herausgeführten Betätigungsglied angeordnet ist. Der Drehgriff weist einen Anschlagkörper auf, der mit einem an dem Ventilgehäuse vorgesehenen Anschlagnocken zusammenwirkt. An dem Drehgriff ist ein Anschlagkörper vorgesehen, der in Drehrichtung gegenüber dem Drehgriff beweglich ist, so dass eine Relativbewegung in Drehrichtung zwischen Anschlagkörper und Drehgriff ermöglicht wird, derart dass sich bei der Verdrehung des Drehgriffs von einer Endposition in eine zweite Endposition ein Drehwinkel ergibt, der größer ist als die Differenz von 360° und der Summe der Kreisöffnungswinkel, die durch den Anschlagkörper und den Anschlagnocken vorgegeben sind.

An einem Ventil ist üblicherweise ein um eine Drehachse bewegbares Betätigungsglied angeordnet, mit welchem ein Ventilelement im Ventilgehäuse bewegt werden kann. Ein haubenförmiger Drehgriff zur Bedienung und Einstellung des Ventils ist drehfest mit dem Betätigungsglied, bsp. einer Spindel gekoppelt. Dazu kann das Betätigungsglied an seinem Außenmantel eine Verzahnung, bsp. ein Gewinde oder eine Riefenverzahnung, aufweisen, die mit einem entsprechenden Innengewinde oder einer Innenverzahnung am Drehgriff korrespondiert. Weiterhin ist koaxial zu dem Betätigungsglied ein feststehender Anschlagnocken an dem Ventilgehäuse oder am Gehäuse einer Sanitärarmatur angeordnet. Dieser kann beispielsweise an einem feststehenden Anschlagring, der an dem Ventilgehäuse oder an der Sanitärarmatur befestigt sein kann, angeordnet sein.

Im Innenbereich des Drehgriffs ist ein Anschlagkörper angeformt oder befestigt, der mit dem feststehenden Anschlagnocken zusammenwirkt. Die Endpositionen des Ventilelements im Ventilgehäuse werden durch das Zusammenwirken von Anschlagkörper und feststehendem Anschlagnocken festgelegt. In einer ersten Endposition, die beispielsweise den Kaltwasserendanschlag und somit die Kaltwasservorlauftemperatur definiert, liegt eine erste Kante des Anschlagkörpers an einer ersten Kante des Anschlagnockens an. Nach einer Drehung des Drehgriffs, dessen maximaler Drehwinkel bei einem Festanschlag durch die Breiten des Anschlagkörpers und des Anschlagnockens bestimmt wird, liegt die zweite Kante des Anschlagkörpers an der gegenüberliegenden zweiten Kante des Anschlagnockens an. Hierdurch wird die zweite Endposition des Ventilelements, beispielsweise der Heißwasserendanschlag und die Heißwasservorlauftemperatur definiert.
Bei bekannten Drehgriffen mit festen Anschlagkörpern ist damit der Drehwinkel insgesamt auf einen Bereich begrenzt, der sich aus einer Umdrehung des Drehgriffs abzüglich der Kreisöffnungswinkel, die durch den Anschlagkörper und den feststehenden Anschlagnocken definiert sind, ergibt.
Bei der vorliegenden Erfindung ist der Anschlagkörper nicht an einer festen Position im Drehgriff fixiert, sondern in Drehrichtung beweglich vorgesehen. Bei einer Drehbewegung aus einer Endposition des Drehgriffs heraus wird der Anschlagkörper zunächst zusammen mit dem Drehgriff mitgeführt, bis nach einer gewissen Drehung seine zweite Kante zur Anlage an die gegenüberliegende zweite Kante des Anschlagnockens gelangt. Bei weiterer Drehung des Drehgriffs blockiert der feststehende Anschlagnocken am Ventilgehäuse eine Bewegung des Anschlagkörpers in Drehrichtung. Der Anschlagkörper verbleibt in dieser Position, während der Drehgriff relativ zu diesem weiterbewegt werden kann.
Durch den vergrößerten Drehwinkelbereich des Drehgriffs ist es möglich, die durch die Abmessungen der Ventilelemente vorgegebenen physikalischen Endstellungen und Grenzwerte des Ventils unter Berücksichtigung der Kennlinie ganz auszunutzen.
Eine Ausgestaltung der Erfindung sieht vor, dass der Drehgriff eine Bahn für den beweglichen Anschlagkörper in Form einer Nut in seiner Mantelfläche aufweist. In dieser Nut ist der bewegliche Anschlagkörper geführt. Die Länge der Nut begrenzt auch die Relativbewegung zwischen Anschlagkörper und Drehgriff. Da der Drehgriff üblicherweise eine zylindrische Form besitzt, bewegt sich der bewegliche Anschlagkörper bei der Betätigung des Ventils auf einer Kreisbahn.
Vorteilhafterweise weist der Anschlagkörper eine Hinterschneidung auf, so dass er gegen ein Herausgleiten aus der Nut gesichert ist. Hierbei sind Anschlagkörper und Nut im Drehgriff in einer Ebene vorgesehen. Je nach gewünschtem Drehwinkel des Drehgriffs, der sich aus der Kennlinie und der damit zusammengehörigen Gewindesteigung des Ventilelements ergibt, schließt die Nut in der Mantelfläche des Drehgriffs einen Kreisbogen mit einem bestimmten Kreisöffnungswinkel, beispielsweise 30° bis 120°, ein.

Insgesamt wird somit der Drehwinkel des Drehgriffs festgelegt durch die Summe des Kreisöffnungswinkels der Nut und des Differenzwinkels, der sich aus 360° abzüglich der Summe der Kreisöffnungswinkel, die durch den Anschlagkörper und den Anschlagnocken definiert sind, ergibt.

Eine alternative Ausführungsform des Drehgriffes sieht vor, dass Anschlagkörper und die Nut zur Führung des Anschlagkörpers in der Mantelfläche axial versetzt zueinander angeordnet sind.
Dabei ist es vorteilhaft, wenn der bewegliche Anschlagkörper als Ringelement vorgesehen ist, das als zusätzliches Bauteil im Drehgriff eingesetzt wird.
Gemäß einer Ausgestaltung der Erfindung kann der Drehgriff zusätzlich zu dem beweglichen Anschlagkörper einen Festanschlag aufweisen. Dieser Festanschlag kann entweder einstückig an dem Drehgriff angeformt und somit unlösbar mit diesem verbunden sein oder lösbar in diesem angeordnet sein. Dazu kann im Drehgriff an der Mantelfläche eine axial ausgerichtete Nut oder eine Öffnung oder Bohrung in radialer Richtung vorgesehen sein, in die der Festanschlag wahlweise eingeschoben werden kann oder nicht.
Während durch den beweglichen Anschlag die maximalen Endpositionen unter Ausnutzung der Stellmöglichkeiten des Ventilelements definiert werden können, können mit dem lösbaren Festanschlag zusätzliche definierte Grenzwerte eingestellt werden. Gerade bei Sanitärarmaturen sind die länderspezifischen Anforderungen an maximal einstellbare Temperaturen sehr unterschiedlich. Beispielsweise ist in Ländern wie den USA eine maximale Temperatur von 43° vorgeschrieben. Die durch das Thermostatventil maximale einstellbare Temperatur ist üblicherweise höher als diese Grenzwerte und liegt im Bereich der durch den Heißwasserhausanschluss vorgegebenen Temperatur.

Im Drehgriff angeordnete Öffnungen oder Nuten zur wahlweisen Anordnung von zusätzlichen Festanschlägen bieten somit die Möglichkeit, einen Grundkörper für einen Drehgriff zu schaffen, der für alle länderspezifischen Ausführungsformen des Ventils oder der Armatur eingesetzt werden kann. Damit reduzieren sich die Anzahl der Bauteile, die im Lager vorgehalten werden müssen, sowie die Herstellkosten für die Werkzeuge.

Eine weitere vorteilhafte Ausgestaltung der Erfindung sieht vor, dass der Drehgriff einen weiteren Anschlag in Form einer Anschlagwippe aufweist, der in einer bestimmten Drehrichtung überwindbar ist und entgegen dieser Drehrichtung als lösbarer Anschlag dient. Durch derartige lösbare Anschläge können dem Benutzer bestimmte Einstellpositionen des Ventilelements, bei Thermostatarmaturen beispielsweise eine bestimmte Komfort-Temperatur, signalisiert werden. Bei einer gewünschten Erhöhung der Temperatur muss der lösbare Anschlag bewusst betätigt werden, um eine Bewegung aus der Anschlagposition zu bewirken. In entgegen gesetzter Richtung gleitet eine abgeschrägte Anschlagnase über den feststehenden Anschlagnocken hinweg.

Gemäß einer Weiterbildung der Erfindung umfasst der Drehgriff eine Griffhaube und einen Tragkörper, wobei der Tragkörper mit dem Betätigungsglied gekoppelt ist. Der Tragkörper ist dabei als Hülse ausgeformt. Der Tragkörper weist dabei eine innere Riefenverzahnung auf, die mit einer äußeren Riefenverzahnung am Betätigungsglied korrespondiert. Weiterhin weist der Tragkörper eine äußere Riefenverzahnung auf, die mit einer inneren Riefenverzahnung an der Griffhaube zusammenwirkt. Somit sind Griffhaube und Betätigungsglied über den dazwischen liegenden Tragkörper miteinander drehfest gekoppelt.

Vorteilhafterweise sind ein beweglicher Anschlag, ein lösbarer Anschlag und/oder ein überwindbarer Anschlag an dem Tragkörper vorgesehen. Dabei kann die Nut, in der der lösbare Anschlag geführt ist, als Schlitz in der Mantelfläche des Tragkörpers vorgesehen sein. Da der Tragkörper von außen durch die Griffhaube überdeckt ist, würde diese sichtbare Öffnung nicht stören. Auch die Nut für den lösbaren Festanschlag kann im Tragkörper ausgeformt sein. Ein überwindbarer Anschlag kann ebenfalls in Form einer Anschlagwippe, deren Drehgelenk als Metallstift in dem Tragkörper eingelassen ist, angeordnet sein. Um die Anschlagwippe immer wieder in die Anschlagposition zurückzuführen, muss zusätzlich am Tragkörper eine Feder vorgesehen sein, gegen deren Federkraft die Anschlagwippe bewegt wird, um den überwindbaren Anschlag aus der Anschlagposition zu lösen. In der Griffhaube ist dann entsprechend eine Drucktaste oder Betätigungstaste vorzusehen, mit der die Druckkraft auf die Anschlagwippe ausgeübt werden kann.

Im Folgenden wird die Erfindung durch einige Ausführungsbeispiele anhand zeichnerischer Darstellungen näher erläutert. Dabei zeigen
- Figur 1: einen Schnitt durch einen Teil einer Sanitärarmatur mit thermostatisch geregeltem Ventil und Drehgriff;
- Figur 2: einen Querschnitt durch den Drehgriff aus Figur 1 entlang der Linie A-A;
- Figur 3: einen Querschnitt durch einen erfindungsgemäßen Drehgriff;
- Figur 4: einen weiteren Querschnitt durch einen erfindungsgemäßen Drehgriff.

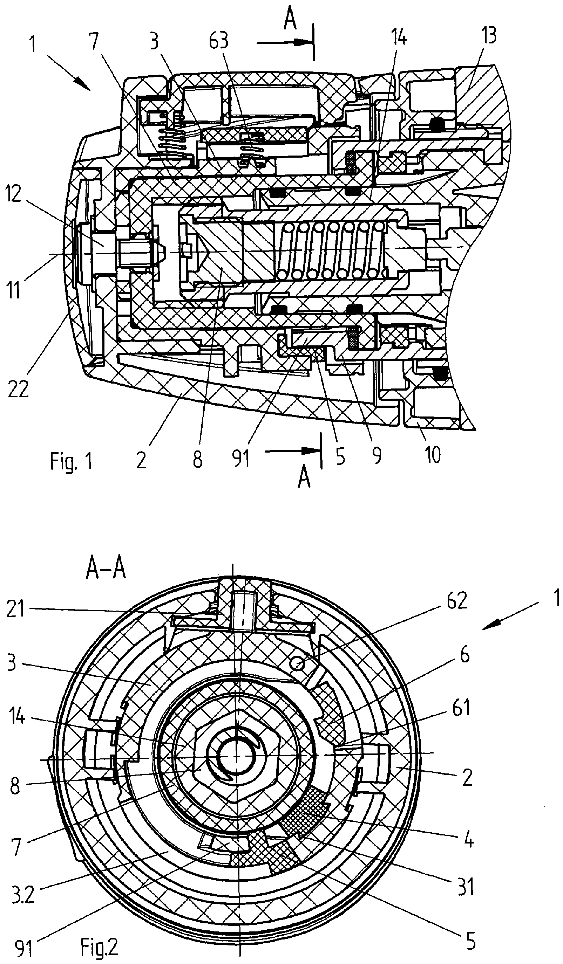

In dem in Figur 1 bis Figur 4 gezeigten Ausführungsbeispiel ist an einer zum Teil dargestellten Sanitärarmatur mit einem thermostatisch geregelten Ventil ein um eine Drehachse 11 bewegbares Betätigungsglied 7 angeordnet. An dem Betätigungsglied 7 ist eine am Außenmantel ausgebildete Riefenverzahnung vorgesehen. Koaxial zum Betätigungsglied 7 ist ein feststehender Anschlagring 9 an der Sanitärarmatur bzw. am Ventilgehäuse 14 befestigt. Auf dem Betätigungsglied 7 ist ein Tragkörper 3 mit einer entsprechenden innen liegenden Riefenverzahnung drehfest gehalten. Der Tragkörper 3 weist eine Haubenform auf, die aus zwei Zylindern mit unterschiedlichen Durchmessern gebildet ist. Im oberen Zylinder, der auch einen Deckel aufweist und konzentrisch zum unteren größeren Zylinder angeordnet ist, ist auch die Riefenverzahnung vorgesehen. An dem unteren zylindrischen Teil des Tragkörpers 3 sind ein beweglicher Anschlagkörper 5, ein lösbarer Festanschlag 4 sowie eine als lösbarer Anschlag wirkende Anschlagwippe 6 angeordnet, die jeweils mit einem feststehenden Anschlagnocken 91 am Anschlagring 9 zusammenwirken.
Der bewegliche Anschlagkörper 5 ist in einer Nut 32 bzw. in einem Schlitz des Tragkörpers 3 geführt.
Figur 2 zeigt den beweglichen Anschlagkörper 5 in einer Anschlagposition. Eine Kante des beweglichen Anschlagkörpers 5 liegt an einer Kante des feststehenden Anschlagnockens 91 an. Durch diese Position des Drehgriffs 1 ist der Kaltwasserendanschlag des thermostatisch geregelten Ventils definiert. Aus dieser Position kann der Drehgriff 1 nur entgegen dem Uhrzeigersinn verdreht werden.

Bei der Verdrehung des Drehgriffs 1 gelangt zunächst die Anschlagnase 61 der Anschlagwippe 6 zur Anlage an den feststehenden Anschlagnocken 91. Die Anschlagwippe 6 ist in einem Fenster des Tragkörpers 3 angeordnet und über eine Achse 62 drehbar am Tragkörper 3 gelagert. Auf der gegenüber liegenden Seite der Anschlagnase 62 ist ein Stellarm vorgesehen, der gegen die Kraft einer Feder 63 heruntergedrückt werden kann, wodurch sich die Anschlagnase 61 aus der Anschlagposition bewegt. Nach dem Lösen der Anschlagwippe 6, die dem Benutzer üblicherweise eine bestimmte Wassertemperatur, vorzugsweise 38°C, signalisiert, kann der Drehgriff 1 weiter gegen den Uhrzeigersinn verdreht werden.
Die Drehbewegung wird dann durch einen lösbaren Endanschlag 4 beendet, der in einer parallel zur Drehachse 11 des Drehgriffs 1 angeordneten Nut 31 im Tragkörper 3 gelagert ist. Sobald der Endanschlag 4 zur Anlage an eine Kante des Anschlagnockens 91 gelangt, ist eine zweite Endposition des Drehgriffs 1 erreicht. Wird der Endanschlag 4 aus der Nut 31 entfernt, ist eine weitere Verdrehung des Drehgriffs 1 entgegen dem Uhrzeigersinn möglich.
Bei der Verdrehung des Drehgriffs 1 wird der bewegliche Anschlagkörper 5 in der Nut 32 des Tragkörpers 3 mitgeführt, bis er mit seiner ersten Kante zur Anlage an einer Kante des feststehenden Anschlagnockens 91 gelangt. Bei einer weiteren Verdrehung wird der Anschlagkörper 5 mittels des feststehenden Anschlagnockens 91 in der Nut 32 bewegt. Er bleibt jedoch mit seiner ersten Kante in Kontakt mit dem Anschlagnocken 91. Ab diesem Moment wird der Drehgriff 1 relativ zum Anschlagkörper 5 bewegt, bis das Ende der Nut 32 erreicht ist und an einer zweiten Kante des Anschlagkörpers 5 anschlägt. Damit ist die zweite Endposition des Ventils erreicht.

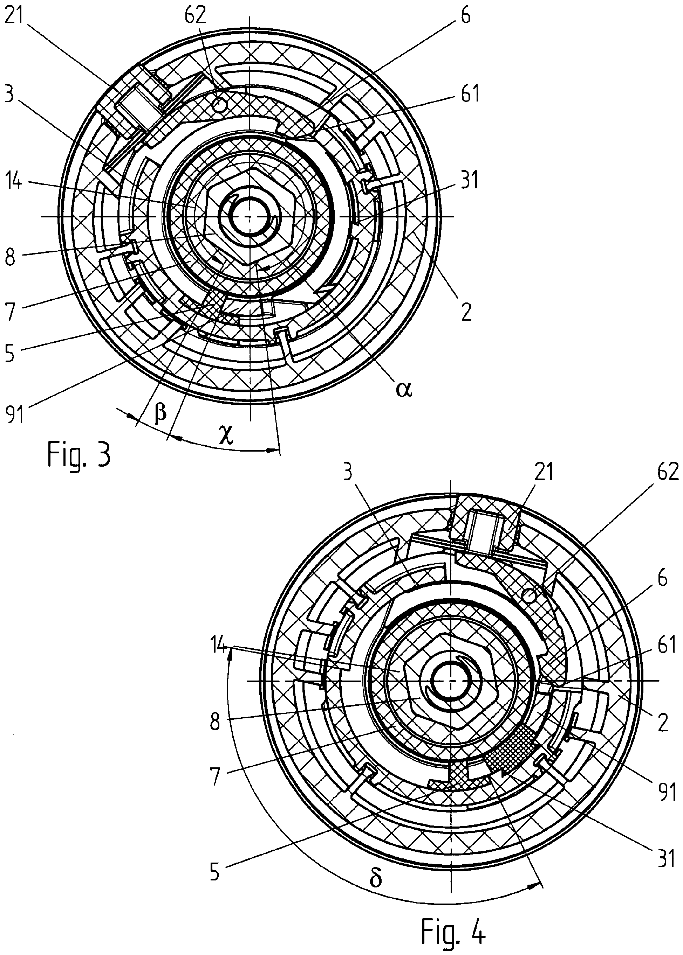

Figur 3 zeigt einen Querschnitt durch einen erfindungsgemäßen Drehgriff 1, mit einem beweglichen Anschlagkörper 5 und einer Anschlagwippe 6. Der bewegliche Anschlagkörper 5 definiert durch seine Breite einen Kreisöffnungswinkel β. In der dargestellten Drehposition liegt der bewegliche Anschlagkörper 5 mit einer seiner Kanten am feststehenden Anschlagnocken 91 an. Durch diese Endposition wird der Heißwasserendanschlag des Ventils definiert. Auch der feststehende Anschlagnocken 91 definiert einen bestimmten Kreisöffnungswinkel χ. Der Drehgriff 1 kann aus dieser Position nur im Uhrzeigersinn verdreht werden. Nach einer Verdrehung um ca. 180 ° gleitet zunächst die schräge Anschlagnase 61 der Anschlagwippe 6 über den feststehenden Anschlagnocken hinweg, so dass die Anschlagwippe kein Hindernis darstellt. Anschließend kann der Drehgriff 1 weiter im Uhrzeigersinn verdreht werden, bis der bewegliche Anschlagkörper 5 an der gegenüberliegenden Kante des feststehenden Anschlagnockens 91 im Hinblick auf die Ausgangssituation zu Anlage gelangt. An dieser Stelle hat der Drehgriff 1 eine Drehbewegung mit einem Drehwinkel α = 360° - (β + χ) vollzogen. Von dieser Stellung an wird der bewegliche Anschlagkörper 5 bei weiterer Verdrehung des Drehgriffs 1 durch den Anschlagnocken 91 blockiert, wodurch es zur Relativbewegung zwischen Tragkörper 3 und beweglichem Anschlagkörper 5 kommt. Erst wenn der Drehgriff 1 soweit verdreht ist, dass der bewegliche Anschlagkörper 5 mit einer Kante am Anschlagnocken 91 und mit der anderen Kante an einer Abschlusskante der Ringnut 31 anliegt, ist die zweite Endposition, in diesem Fall dann der Kaltwasserendanschlag, erreicht. In dieser zweiten Endposition hat der Drehgriff eine Drehbewegung mit einem Drehwinkel α = 360° - (β + χ) + δ vollzogen. Da der Kreisöffnungswinkel δ, der durch die Nut 32 festgelegt wird, üblicherweise größer ist als die Summer der Kreisöffnungswinkel β+χ, die durch den beweglichen Anschlagkörper 5 und den feststehenden Anschlagnocken 91 definiert werden, ergibt sich für den Drehgriff 1 ein Drehwinkel α, der größer ist als 360°.
Im Gegensatz dazu zeigt Figur 4 eine Ausführungsvariante eines Drehgriffs mit lösbarem Festanschlag 4, beweglichem Anschlagkörper 4 und Anschlagwippe 6. Wie bereits oben beschrieben, befindet sich der Drehgriff 1 hier in der Endposition für den Kaltwasserendanschlag.

### Bezugszeichenliste

- 1: Drehgriff
- 2: Griffhaube
- 21: Drucktaste
- 22: Abdeckkappe
- 3: Tragkörper
- 31: axiale Nut
- 32: Ringnut / radiale Nut
- 4: lösbarer Festanschlag
- 5: beweglicher Anschlagkörper
- 6: Anschlagwippe
- 61: schräge Anschlagnase
- 62: Drehachse
- 63: Druckfeder, Wegfeder
- 7: Betätigungsglied / Reguliermutter
- 8: Überlasteinheit
- 9: Anschlagring
- 91: feststehender Anschlagnocken
- 10: Schmuckring
- 11: Drehachse
- 12: Schraube
- 13: Sanitärarmatur
- 14: Ventilgehäuse / Kopfstück
- α: möglicher Drehwinkel des Drehgriffs
- β: Kreisöffnungswinkel des beweglichen Anschlagkörpers 5
- χ: Kreisöffnungswinkel des feststehenden Anschlagnockens 91
- δ: Kreisöffnungswinkel der Nut 32
- ε: Differenzwinkel 360°-(β+χ)

## Patentansprüche

1. Anordnung (1) für ein thermostatisch geregeltes Ventil, aufweisend:
- einen Drehgriff (1) mit Anschlagkörper (5), - ein aus einem Ventilgehäuse (14) herausgeführtes Betätigungsglied (7), und
- einen am Ventilgehäuse (14) vorgesehenen Anschlagnocken (91), wobei:
- der Drehgriff (1) am Betätigungsglied (7) angeordnet ist, und
- der Anschlagkörper (5) mit dem Anschlagnocken (91) zusammenwirkt,
**dadurch gekennzeichnet, dass** der Anschlagkörper (5) in Drehrichtung beweglich gegenüber dem Drehgriff (1) vorgesehen ist, derart dass durch eine Relativbewegung in Drehrichtung zwischen Anschlagkörper (5) und Drehgriff (1) eine Verdrehung des Drehgriffs (1) um einen Drehwinkel (α) ermöglicht wird, der größer ist als der Differenzwinkel (ε), der sich aus 360° abzüglich der Summe der Kreisöffnungswinkel (β, χ), die durch den Anschlagkörper (5) und den Anschlagnocken (91) definiert sind, ergibt.

2. Anordnung gemäß Anspruch 1, **dadurch gekennzeichnet, dass** sich der bewegliche Anschlagkörper (5) auf einer kreisförmigen Bahn bewegt.

3. Anordnung gemäß Anspruch 1 oder 2, **dadurch gekennzeichnet, dass** in seiner Mantelfläche eine Bahn in Form einer Nut (32) zur Führung des beweglichen Anschlagkörpers (5) vorgesehen ist.

4. Anordnung gemäß Anspruch 3, **dadurch gekennzeichnet, dass** die Nut (32) in Abhängigkeit von einer Kennlinie eines Ventilelements die Form eines Kreisbogens mit einem definierten Kreisöffnungswinkel (δ) aufweist.

5. Anordnung gemäß einem der Ansprüche 2 bis 4, **dadurch gekennzeichnet, dass** der Drehwinkel (α) des Drehgriffes (1) festgelegt wird durch den Kreisöffnungswinkel (δ) der Nut (32) und den Differenzwinkel (ε), der sich aus 360° abzüglich der Summe der Kreisöffnungswinkel (β, χ), die durch den Anschlagkörper (5) und den Anschlagnocken (91) definiert sind, ergibt.

6. Anordnung gemäß Anspruch 5, **dadurch gekennzeichnet, dass** sich der maximale Drehwinkel (α) des Drehgriffes (1) durch die Summe des Kreisöffnungswinkels (δ) der Nut (32) und des Differenzwinkels (ε) ergibt.

7. Anordnung gemäß einem der Ansprüche 3 bis 6, **dadurch gekennzeichnet, dass** der bewegliche Anschlagkörper (5) eine Hinterschneidung zur Führung in der Nut (32) aufweist.

8. Anordnung gemäß einem der Ansprüche 3 bis 7, **dadurch gekennzeichnet, dass** der bewegliche Anschlagkörper (5) und die Nut zur Führung des Anschlagkörpers (5) in der Mantelfläche des Drehgriffs axial versetzt zueinander angeordnet sind.

9. Anordnung gemäß einem der vorhergehenden Ansprüche, **dadurch gekennzeichnet, dass** der bewegliche Anschlagkörper (5) als Ringelement vorgesehen ist.

10. Anordnung gemäß einem der vorhergehenden Ansprüche, **dadurch gekennzeichnet, dass** ein weiterer lösbarer Festanschlag (4) vorgesehen ist.

11. Anordnung gemäß einem der vorhergehenden Ansprüche, **dadurch gekennzeichnet, dass** ein weiterer Anschlag in Form einer Anschlagwippe (6) vorgesehen ist, der in einer bestimmten Drehrichtung überwindbar ist und entgegen dieser Drehrichtung als lösbarer Anschlag dient.

12. Anordnung gemäß einem der vorhergehenden Ansprüche, **dadurch gekennzeichnet, dass** der Drehgriff (1) eine Griffhaube (2) und einen Tragkörper (3) umfasst, wobei der Tragkörper (3) mit dem Betätigungsglied (7) gekoppelt ist.

13. Anordnung gemäß Anspruch 12, **dadurch gekennzeichnet, dass** der bewegliche Anschlag (5), der Festanschlag (4) und / oder die Anschlagwippe (6) an dem Tragkörper (3) vorgesehen sind.

## Claims

1. Arrangement (1) for a thermostatically controlled valve, comprising:
- a rotary handle (1) having a stop body (5),
- an actuating member (7) guided out of a valve housing (14), and
- a stop cam (91) provided on the valve housing (14), wherein:
- the rotary handle (1) is arranged on the actuating member (7), and
- the stop body (5) cooperates with the stop cam (91),
**characterised in that** the stop body (5) is provided to be movable relative to the rotary handle (1) in a direction of rotation, in such a manner that a relative movement in the direction of rotation between the stop body (5) and the rotary handle (1) permits rotation of the rotary handle (1) through an angle of rotation (α) which is greater than the differential angle (ε) resulting from 360° minus the sum of the circular opening angles (β, χ) which are defined by the stop body (5) and the stop cam (91).

2. Arrangement according to claim 1, **characterised in that** the movable stop body (5) moves on a circular path.

3. Arrangement according to claim 1 or 2, **characterised in that** there is provided in its lateral surface a path in the form of a groove (32) for guiding the movable stop body (5).

4. Arrangement according to claim 3, **characterised in that** the groove (32), in dependence on a characteristic curve of a valve element, has the form of an arc with a defined circular opening angle (δ).

5. Arrangement according to any one of claims 2 to 4, **characterised in that** the angle of rotation (α) of the rotary handle (1) is specified by the circular opening angle (δ) of the groove (32) and the differential angle (ε) resulting from 360° minus the sum of the circular opening angles (β, χ) which are defined by the stop body (5) and the stop cam (91).

6. Arrangement according to claim 5, **characterised in that** the maximum angle of rotation (α) of the rotary handle (1) is given by the sum of the circular opening angle (δ) of the groove (32) and the differential angle (ε).

7. Arrangement according to any one of claims 3 to 6, **characterised in that** the movable stop body (5) has an indentation for guiding in the groove (32).

8. Arrangement according to any one of claims 3 to 7, **characterised in that** the movable stop body (5) and the groove for guiding the stop body (5) in the lateral surface of the rotary handle are arranged axially offset relative to one another.

9. Arrangement according to any one of the preceding claims, **characterised in that** the movable stop body (5) is provided in the form of an annular element.

10. Arrangement according to any one of the preceding claims, **characterised in that** a further releasable fixed stop (4) is provided.

11. Arrangement according to any one of the preceding claims, **characterised in that** a further stop in the form of a stop rocker (6) is provided, which stop can be overcome in a specific direction of rotation and serves as a releasable stop against that direction of rotation.

12. Arrangement according to any one of the preceding claims, **characterised in that** the rotary handle (1) comprises a grip cover (2) and a supporting body (3), wherein the supporting body (3) is coupled with the actuating member (7).

13. Arrangement according to claim 12, **characterised in that** the movable stop (5), the fixed stop (4) and/or the stop rocker (6) are provided on the supporting body (3).

## Revendications

1. Dispositif (1) destiné à une soupape à régulation thermostatée comprenant :
- une poignée rotative (1) équipée d'un corps formant butée (5),
- un organe d'actionnement (7) dépassant d'un boîtier de soupape (14), et
- une came formant butée (91) située sur le boîtier de soupape (14),
- la poignée rotative (1) étant montée sur l'organe d'actionnement (7), et
- le corps formant butée (5) coopérant avec la came formant butée (91),
**caractérisé en ce que**
le corps formant butée (5) est monté mobile dans la direction de rotation par rapport à la poignée rotative (1), de sorte qu'un déplacement relatif dans la direction de rotation entre le corps formant butée (5) et la poignée rotative (1) permette une rotation de la poignée rotative (1) d'un angle de rotation (α) qui est supérieur à l'angle différentiel (ε) égal à 360° moins la somme des angles d'ouverture de cercle (β, x), qui sont définis par le corps formant butée (5) et la came formant butée (91).

2. Dispositif conforme à la revendication 1,
**caractérisé en ce que**
le corps formant butée mobile (5) se déplace sur une piste circulaire.

3. Dispositif conforme à la revendication 1 ou 2,
**caractérisé en ce qu'**
il comporte, sur sa surface enveloppe une piste réalisée sous la forme d'une rainure (32) de guidage du corps formant butée mobile (5).

4. Dispositif conforme à la revendication 3,
**caractérisé en ce que**
la rainure (32) a en fonction d'une caractéristique d'un élément de soupape la forme d'un arc de cercle ayant un angle d'ouverture de cercle défini (δ).

5. Dispositif conforme à l'une des revendications 2 à 4,
**caractérisé en ce que**
l'angle de rotation (α) de la poignée rotative (1) est fixé par l'angle d'ouverture de cercle (δ) de la rainure (32) et l'angle différentiel (δ) égal à 360° moins la somme des angles d'ouverture de cercle (β, x) qui sont définis par le corps formant butée (5) et la came formant butée (91).

6. Dispositif conforme à la revendication 5,
**caractérisé en ce que**
l'angle de rotation maximum (α) de la poignée rotative (1) est égal à la somme de l'angle d'ouverture de cercle (δ) de la rainure (32) et de l'angle différentiel (ε).

7. Dispositif conforme à l'une des revendications 3 à 6,
**caractérisé en ce que**
le corps formant butée mobile (5) comporte une contre-dépouille permettant sont guidage dans la rainure (32).

8. Dispositif conforme à l'une des revendications 3 à 7,
**caractérisé en ce que**
le corps formant butée mobile (5) et la rainure de guidage du corps formant butée (5) sont décalés axialement l'un par rapport à l'autre dans la surface enveloppe de la poignée rotative.

9. Dispositif conforme à l'une des revendications précédentes,
**caractérisé en ce que**
le corps formant butée mobile (5) est réalisé sous la forme d'un élément annulaire.

10. Dispositif conforme à l'une des revendications précédentes,
**caractérisé en ce qu'**
il est prévu une autre butée fixe amovible (4).

11. Dispositif conforme à l'une des revendications précédentes,
**caractérisé en ce qu'**
il est prévu une autre butée réalisée sous la forme d'une bascule formant butée (6) qui peut être surmontée dans une direction de rotation définie et sert de butée amovible dans la direction opposée à cette direction de rotation.

12. Dispositif conforme à l'une des revendications précédentes,
**caractérisé en ce que**
la poignée rotative (1) comprend un capot de manoeuvre (2) et un corps de support (3), le corps de support (3) étant couplé à l'organe d'actionnement (7).

13. Dispositif conforme à la revendication 12,
**caractérisé en ce que**
la butée mobile (5), la butée fixe (4) et/ou la bascule formant butée (6) est(sont) montée(s) sur le corps de support (3).
